# DEMANDE DE BREVET EUROPEEN

(11) **EP 1 422 867 A1**
(43) Date de publication de la demande: **26.05.2004**
(21) Numéro de dépôt: 03292837.6
(22) Date de dépôt: 14.11.2003
(51) Int. Cl.: H04L 12/14, H04M 15/00

(54) **Système et procédé d'accès à la toile d'araignée mondiale**

(30) Priorité: 25.11.2002 FR 0214762
(71) Demandeur: FRANCE TELECOM, 75015 Paris (FR)
(72) Inventeur: Robert, Serge, 78140 Velizy (FR)
(74) Mandataire: Habasque, Etienne Joel Jean-François

(57) **Abrégé**

Ce système d'accès à la toile d'araignée mondiale, comporte un serveur de crédit (60) raccordé par l'intermédiaire d'un réseau public (10) de transmission d'informations à différents centres d'accès (6, 7) à la toile d'araignée mondiale et à au moins un fournisseur d'accès (8). De plus, le serveur de crédit (60) est apte à gérer les connexions à la toile d'araignée mondiale (4) établies à partir de chacune des stations d'accès (20) des différents centres d'accès (6, 7) de manière à former un serveur de crédit commun aux différents centres d'accès (6, 7) et au fournisseur d'accès (8).

## Description

L'invention concerne un système et un procédé d'accès à la toile d'araignée mondiale.

Les systèmes connus d'accès à la toile d'araignée mondiale comportent classiquement :
- plusieurs centres d'accès à la toile d'araignée mondiale indépendants les uns des autres et équipés chacun d'au moins une station d'accès à la toile d'araignée mondiale, la ou chaque station d'accès étant apte à être raccordée à un fournisseur d'accès pour naviguer sur la toile d'araignée mondiale par l'intermédiaire d'un réseau public de transmission d'informations, et
- au moins un fournisseur d'accès équipé d'un ensemble de serveurs informatiques propre à fournir un accès à la toile d'araignée mondiale pour des stations d'accès, et
- un serveur de crédit apte à gérer les connexions à la toile d'araignée mondiale en fonction d'informations représentatives d'un crédit sur un compte.

Dans la suite de cette description, les termes "Internet" ou "réseau Internet" désignent la toile d'araignée mondiale.

Dans les systèmes d'accès connus, les centres d'accès à Internet sont, par exemple, connus sous le terme de "cybercafés". Chaque cybercafé rémunère un fournisseur d'accès pour que ses stations d'accès puissent être raccordées à Internet. Dès lors, chaque cybercafé est équipé en interne d'un serveur de crédit propre à gérer les temps de connexion à Internet de chacune de ses stations d'accès, de manière ensuite à être capable de facturer ses clients proportionnellement au temps de connexion à Internet consommé.

Dans le cas des cybercafés, il y a donc autant de serveurs de crédit que de cybercafés.

La démultiplication des serveurs de crédit conduit à un gaspillage de ressources informatiques.

L'invention vise à remédier à cet inconvénient en proposant un système d'accès à Internet simplifié.

L'invention a donc pour objet un système d'accès à la toile d'araignée mondiale tel que décrit ci-dessus caractérisé en ce que le serveur de crédit est raccordé aux différents centres d'accès et audit au moins un fournisseur d'accès par l'intermédiaire du réseau public, et le serveur de crédit est apte à gérer les connexions à la toile d'araignée mondiale établies à partir de chacune des stations d'accès des différents centres d'accès de manière à former un serveur de crédit commun aux différents centres d'accès et audit au moins un fournisseur d'accès.

Dans le système décrit ci-dessus, le serveur de crédit est, d'une part, apte à gérer les temps de connexion à Internet pour chacune des stations d'accès des différents centres d'accès et, d'autre part, est commun à différents centres d'accès indépendants les uns des autres. Ainsi, si ces centres d'accès sont des cybercafés, il n'est plus nécessaire d'implanter, dans chacun de ces cybercafés, un serveur de crédit. Le système d'accès à la toile d'araignée mondiale s'en trouve donc simplifié.

Suivant d'autres caractéristiques du système d'accès à la toile d'araignée mondiale conforme à l'invention :
- il comporte un ensemble d'organes de commutation commandables propre à raccorder entre elles différentes voies de communication du réseau public de manière à établir une liaison de transmission d'informations entre chaque station d'accès et ledit au moins un fournisseur d'accès, et le serveur de crédit est apte à commander chaque organe de commutation pour établir ou inhiber une liaison de transmission d'informations entre une station d'accès d'un des centres d'accès et ledit au moins un fournisseur d'accès ;
- la ou chaque station d'accès est propre à :
   - acquérir une demande d'établissement d'une liaison de transmission d'informations avec ledit au moins un fournisseur d'accès, et
   - en réponse à cette demande, acquérir un numéro de compte, et
   - le serveur de crédit est apte à recevoir le numéro de compte acquis par la ou chaque station d'accès et, en réponse, à commander lesdits organes de commutation en fonction des informations représentatives d'un crédit sur le compte associé au numéro de compte reçu ;
- le serveur de crédit est apte à acquérir, pour la liaison de transmission d'informations dont il a commandé l'établissement, le temps écoulé entre l'instant d'établissement de cette liaison et l'instant d'interruption de cette liaison, et à débiter automatiquement un compte correspondant au numéro de compte reçu d'un montant fonction de ce temps écoulé ;
- le serveur de crédit est apte à commander l'interruption, au sein même du réseau public, d'une liaison de transmission d'informations dont il a commandé l'établissement lorsque le crédit sur le compte correspondant à cette liaison est épuisé ;
- le serveur de crédit est apte à commander ou à inhiber l'établissement de la liaison de transmission d'informations entre une station d'accès et ledit au moins un fournisseur d'accès uniquement en fonction du numéro de compte transmis et du crédit disponible sur le compte correspondant à ce numéro de compte ;
- il comporte des tickets formant moyens de paiement, chaque ticket comportant un cache amovible propre à occulter un numéro de compte créditeur ;
- le cache amovible est une couche opaque propre à être grattée pour découvrir le numéro de compte créditeur ;
- chaque centre d'accès comporte plusieurs stations d'accès et un serveur d'accès, et le serveur d'accès est apte à recevoir la demande d'établissement d'une liaison de transmission d'informations avec ledit au moins un fournisseur d'accès acquise par chaque station d'accès, et, en réponse, à commander l'acquisition par chaque station d'accès d'un numéro de compte, et à transmettre le numéro de compte acquis au serveur de crédit ;
- les stations d'accès sont raccordées au serveur d'accès par un réseau local de transmission d'informations ;
- chaque station d'accès est équipée :
   - d'un logiciel de navigation sur la toile d'araignée mondiale, et
   - d'un logiciel de détection automatique de la fermeture du logiciel de navigation propre, en réponse à la détection de la fermeture, à transmettre une commande de déconnexion au serveur d'accès du centre d'accès correspondant, et ce serveur d'accès est propre à transmettre automatiquement une commande d'interruption de la liaison de transmission d'informations entre une station d'accès et ledit au moins un fournisseur d'accès au serveur de crédit en réponse à la réception d'une commande de déconnexion ;
- le serveur d'accès est associé à des moyens de stockage d'informations contenant une copie du logiciel de détection, et le serveur d'accès est propre à détecter automatiquement l'absence du logiciel de détection sur une station d'accès en réponse à la réception d'une demande d'établissement d'une liaison de transmission d'informations transmises par cette station d'accès, et à commander le transfert d'une copie du logiciel de détection vers cette station d'accès à partir de moyens de stockage d'informations associés au serveur d'accès .

L'invention a également pour objet un procédé d'accès à la toile d'araignée mondiale dans un système conforme à l'invention, caractérisé en ce qu'une station d'accès acquiert une demande d'établissement d'une liaison de transmission d'informations avec ledit au moins un fournisseur d'accès, et, en réponse à cette demande, acquiert un numéro de compte.

L'invention sera mieux comprise à la lecture de la description qui va suivre, donnée uniquement à titre d'exemple et faite en se référant aux dessins sur lesquels :
- la figure 1 est une illustration schématique d'un premier mode de réalisation d'un système d'accès à la toile d'araignée mondiale conforme à l'invention,
- la figure 2 est un organigramme d'un procédé d'accès à la toile d'araignée mondiale conforme à l'invention,
- la figure 3 est une illustration schématique d'un second mode de réalisation d'un système d'accès à la toile d'araignée conforme à l'invention, et
- la figure 4 est un extrait d'un organigramme d'un procédé d'accès à la toile d'araignée mondiale dans le système de la figure 3.

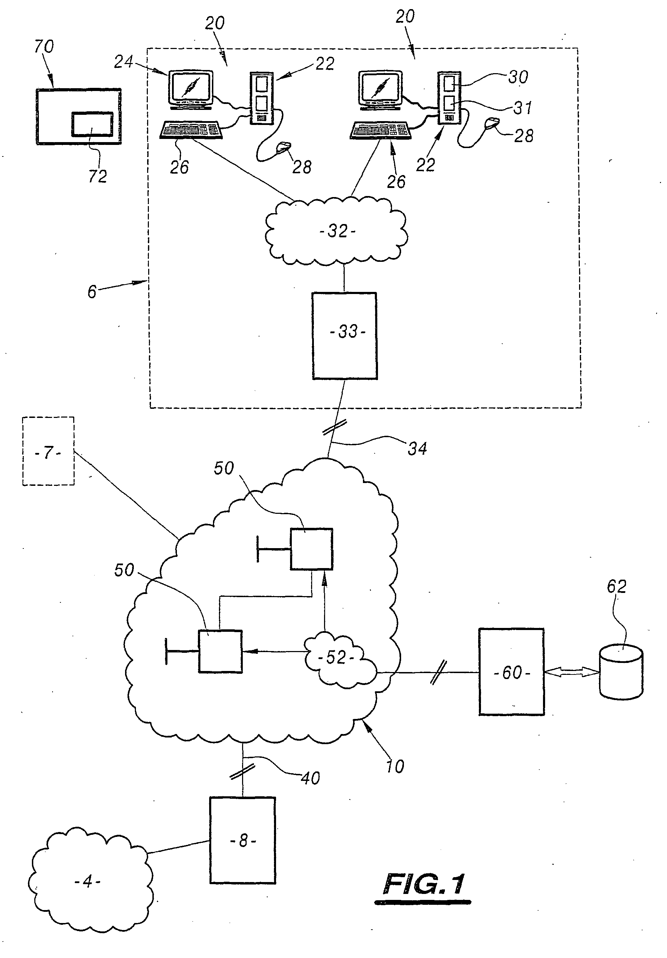

La figure 1 représente un système d'accès à la toile d'araignée mondiale 4 à partir de plusieurs centres d'accès, ici, deux cybercafés 6, 7. Les cybercafés 6, 7 étant, par exemple, de structure similaire, seul le cybercafé 6 sera décrit ici en détail.

Le cybercafé 6 est raccordé à un fournisseur 8 d'accès à la toile d'araignée mondiale 4 par l'intermédiaire d'un réseau public 10 de transmission d'informations.

Ici, le cybercafé 6 comporte plusieurs stations d'accès 20 formées par exemple chacune par un ordinateur équipé d'une unité centrale 22 et d'une interface homme/machine telle qu'un écran 24, un clavier 26 et une souris informatique 28. Chacune de ces stations est équipée d'un logiciel conventionnel 30 de navigation sur la toile d'araignée mondiale 4 et d'un logiciel 37 de détection automatique de la fermeture du logiciel 30. Le logiciel 30 est plus connu sous le terme de navigateur Internet.

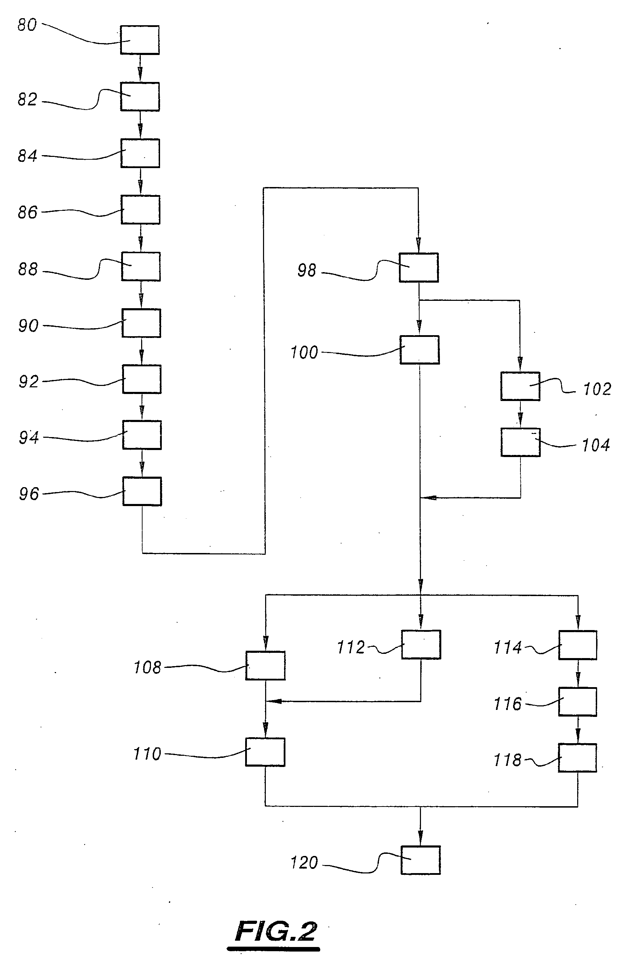

Chacune de ces stations 20 est raccordée par l'intermédiaire d'un réseau local 32 de transmission d'informations à un serveur d'accès 33. Le serveur d'accès 33 remplit les fonctions d'un serveur PROXI classique c'est-à-dire qu'il filtre et vérifie les informations transmises à partir des stations d'accès 20 et/ou reçues à partir de la toile d'araignée mondiale 4. Ce serveur d'accès 33 est par exemple réalisé à partir d'un serveur informatique conventionnel programmable. Ce serveur 33 est ici programmé de façon conventionnelle pour réaliser les tâches qui seront décrites en regard de la figure 2.

Avantageusement, le serveur d'accès 33 est raccordé au réseau public 10 par plusieurs voies 34 de communication de manière à permettre l'établissement de liaisons de transmission d'informations simultanées entre les stations d'accès 20 et le fournisseur d'accès 8. Par exemple, ici, le serveur d'accès 33 est raccordé au réseau public 10 par autant de voies de communication que de stations d'accès 20 raccordées au réseau local 37.

Ces voies de communication 34 sont soit regroupées sur un même support physique tel qu'un câble ou une fibre optique soit au contraire réparties sur plusieurs supports physiques tels qu'une pluralité de conducteurs électriques.

Dans le cas où les navigateurs 30 sont des navigateurs Internet commercialisés par la société Microsoft et connus sous le terme d'''Internet Explorer", chacun de ces navigateurs 30 est configuré pour accéder à Internet par l'intermédiaire d'un serveur PROXI, c'est-à-dire ici le serveur d'accès 33. Ainsi, à chaque lancement du navigateur 30, une demande d'établissement d'une liaison de transmission d'informations avec le fournisseur d'accès 8 est automatiquement transmise au serveur d'accès 33.

Le logiciel de détection 31 est ici propre à détecter la fermeture du navigateur 30 et à transmettre immédiatement cette information au serveur d'accès 33 par l'intermédiaire du réseau local 32.

La toile d'araignée mondiale 4 plus connue sous l'acronyme WEB (World Wide Web) est formée d'un ensemble de réseaux de transmission d'informations raccordés les uns aux autres par l'intermédiaire de routeur de réseau IP et auquel est raccordée une multitude de serveurs Internet. L'ensemble de ces serveurs Internet partage un même protocole de communication c'est-à-dire le protocole de communication TCP /IP.

Le fournisseur 8 d'accès à Internet est typiquement équipé d'un ou plusieurs serveurs informatiques propres chacun à recevoir des instructions de navigation sur la toile d'araignée mondiale 4 transmise à partir de différentes stations d'accès.

De manière à pouvoir gérer un grand nombre de connexions simultanées au réseau 4, le fournisseur d'accès 8 est classiquement raccordé au réseau public 10 par l'intermédiaire de plusieurs voies de communication 40 (indiquées par les traits obliques sur la liaison 40).

Le réseau public 10 est formé par plusieurs organes de commutation 50 raccordés les uns aux autres par l'intermédiaire de voies de communication. Chaque organe de commutation comporte une ou plusieurs voies de communication entrantes et typiquement une ou plusieurs voies de communication sortantes.

Chaque organe de commutation 50 est apte à raccorder une voie de communication entrante avec l'une des voies de communication sortantes de manière à établir une liaison de transmission d'informations entre deux points quelconques de raccordement au réseau public 10. Chacune de ces liaisons de transmission d'informations est donc formée à partir de plusieurs voies de communication du réseau public 10.

Le réseau public 10 est un réseau public dit intelligent c'est-à-dire que les organes de commutation 50 sont raccordés à un réseau secondaire 52 de transmission d'informations appelé également réseau intelligent. Ce réseau intelligent permet de recueillir à partir des organes de commutation 50 des informations sur les liaisons de transmission d'informations établies telles que par exemple le temps écoulé depuis le début de la connexion ou encore de transmettre à chacun de ces organes de communication des ordres d'établissement ou au contraire d'interruption d'une liaison de transmission d'informations.

Les organes de commutation 50 sont conventionnels et par exemple connus sous le terme de CTS/CAS dans le réseau public de l'opérateur France Télécom en France.

Le système comporte également un unique serveur de crédit 60 raccordé au réseau public 10 et au réseau intelligent 52. Ce serveur 60 est associé à une mémoire électronique 62 formant moyen de stockage d'informations. Cette mémoire comporte une base de données dans laquelle sont enregistrées des informations relatives à des comptes de consommation, dont, dans le cas présent, de consommation d'accès à la toile d'araignée mondiale 4. Plus précisément, pour chaque compte la base de données comporte un numéro de compte identifiant de façon unique ce compte et un crédit de consommation associé à ce numéro de compte.

Ce serveur 60 est ici propre à commander les organes de commutation 50 par l'intermédiaire du réseau intelligent 52 pour établir ou au contraire interrompre une liaison de transmission d'informations entre par exemple le serveur d'accès 33 et le fournisseur d'accès 8.

De plus, ce serveur 60 est capable de recevoir les informations relatives au temps écoulé depuis le début de l'établissement d'une liaison de transmission d'informations et de débiter le crédit du compte correspondant à cette liaison d'un montant proportionnel au temps écoulé.

Ce serveur est par exemple implanté directement dans l'un des organes de commutation 50 du réseau public 10.

Typiquement, dans le cas du réseau public de France Télécom, ce serveur de crédit 60 est implanté dans un organe de commutation CTS/CAS. De plus, ce serveur 60 est programmé de façon conventionnelle de manière à réaliser les tâches qui seront décrites en regard de la figure 2.

Dans le cas particulier décrit ici, le système comporte aussi des tickets 70 formant moyens de paiement. Chacun de ces tickets 70 présente une couche opaque 72 grattable à l'aide d'un ongle et recouvrant un numéro de compte correspondant à un numéro de compte créditeur enregistré dans la mémoire 62.

Le fonctionnement du système d'accès à la toile d'araignée mondiale 4 va maintenant être décrit en regard de la figure 2.

Un utilisateur achète auprès d'un point de vente, par exemple, dans le cybercafé 6, un ticket 70. Ensuite, il gratte la couche opaque 72 pour découvrir le numéro de compte occulté par cette couche 72.

A l'étape 80, l'utilisateur s'assied en face d'une des stations 20 du cybercafé 6 et lance l'exécution du navigateur 30. Le navigateur 30 transmet alors automatiquement, à l'étape 82, une demande d'établissement d'une liaison de transmission d'informations vers le fournisseur d'accès Internet 8 au serveur d'accès 33.

Le serveur d'accès commande alors, à l'étape 84, l'affichage par le navigateur 30 de la station d'accès utilisée d'une page HTML propre à permettre à l'utilisateur de saisir le numéro de compte inscrit sur son ticket 70.

L'utilisateur saisit alors ce numéro de compte, à l'étape 86 et la station d'accès 20 transmet le numéro de compte saisi au serveur d'accès 33.

En réponse à la réception du numéro de compte saisi par l'utilisateur, le serveur d'accès 33, à l'étape 88, commande automatiquement l'établissement d'une liaison de transmission d'informations avec le serveur 60 par l'intermédiaire du réseau public 10. Par exemple, le serveur d'accès numérote un numéro de téléphone correspondant au serveur 60.

Une fois la liaison de transmission d'informations établie entre le serveur d'accès 33 et le serveur de crédit 60, le serveur d'accès 33 transmet à l'étape 90 le numéro de compte reçu, au serveur de crédit 60.

Lorsque le serveur de crédit 60 reçoit le numéro de compte, il vérifie automatiquement à l'étape 92 si ce numéro de compte est valide. Par exemple, il vérifie que ce numéro de compte correspond à un numéro de compte existant dans la base de données enregistrées dans la mémoire 62 et que le crédit associé à ce numéro de compte est positif.

Si le numéro de compte est valide, le serveur de crédit transmet au serveur d'accès 33, à l'étape 94, une requête de demande du numéro de téléphone à appeler.

A l'étape 96, le serveur d'accès 33 reçoit cette requête et y répond en communiquant au serveur de crédit 60 le numéro de téléphone correspondant au fournisseur d'accès 8.

A la réception du numéro de téléphone à appeler, le serveur de crédit 60, à l'étape 98, commande le ou les organes de commutation 50 par l'intermédiaire du réseau intelligent 52 pour que ceux-ci établissent une liaison de transmission d'informations entre le serveur d'accès 33 et le fournisseur d'accès 8. A cet effet, le serveur de crédit 60 transmet, par exemple, le numéro de téléphone appelé aux organes de commutation 50.

Une fois la liaison de transmission d'informations établie entre le serveur d'accès 33 et le fournisseur d'accès 8, le navigateur 30, à l'étape 100, sous la commande de l'utilisateur, télécharge de façon classique des pages HTML à partir de la toile d'araignée mondiale 4 par l'intermédiaire successivement du fournisseur d'accès 8, d'une des voies de communication 40, du réseau public 10, d'une des voies de communication 34, et du réseau local 32.

Simultanément, dès que la liaison de transmission d'informations est établie entre le serveur d'accès 33 et le fournisseur d'accès 8, les organes de commutation transmettent en permanence, à l'étape 102, vers le serveur de crédit 60, le numéro de téléphone appelé et le temps écoulé depuis que la liaison de transmission d'informations a été établie.

A chaque fois que le serveur de crédit 60 reçoit, à l'étape 104, une information sur le temps écoulé, il débite le crédit du compte correspondant à cette liaison de transmission d'informations d'un montant proportionnel au temps écoulé.

Ensuite, l'interruption de cette liaison de transmission d'informations peut se produire de différentes manières.

Par exemple, si le serveur de crédit 60 détecte que le crédit de consommation associé au numéro de compte est épuisé, lors d'une étape 108, il commande les organes de commutation 50 pour interrompre la liaison de transmission d'informations correspondant au compte dont le crédit est épuisé.

Une fois la liaison de transmission d'informations interrompue, le serveur de crédit 60, à l'étape 110, en informe le serveur d'accès 33 pour que celui-ci en réponse commande l'affichage d'un message d'informations correspondant sur la station d'accès 20 utilisée.

Dans le cas où l'interruption de la liaison de transmission d'informations est accidentelle, les organes de commutation 50, lors de l'étape 112, en informent le serveur de crédit 60 qui, à son tour, procède directement à l'étape 110 précédemment décrite.

Finalement, l'interruption de la liaison de transmission d'informations peut être commandée par l'utilisateur lui-même. Par exemple, ici, lors d'une étape 114, le navigateur 30 est fermé par l'utilisateur et le logiciel de détection 31 détecte automatiquement cette fermeture et transmet immédiatement au serveur d'accès 33 une commande de déconnexion.

En réponse, le serveur d'accès 33 retransmet cette commande de déconnexion au serveur de crédit 60 par l'intermédiaire du réseau public 10 à l'étape 116.

A la réception d'une commande de déconnexion, le serveur de crédit 60, à l'étape 118, commande immédiatement les organes de commutation 50 pour interrompre cette liaison de transmission d'informations.

A chaque fois qu'une liaison de transmission d'informations correspondant à un numéro de compte est interrompue, le serveur de crédit 60, à l'étape 120, interrompt le débit du compte correspondant.

Si le crédit associé au numéro de compte de l'utilisateur n'est pas épuisé après que la liaison de transmission d'informations ait été interrompue, l'utilisateur peut plus tard revenir dans le cybercafé 6 ou un autre et procéder de nouveau à l'étape 80.

Dans le mode de réalisation du système de la figure 1, les cybercafés 6 et 7 sont dépourvus de serveur de crédit ou d'autres appareils en local propre à compter et à facturer le temps de connexion à la toile d'araignée mondiale 4. Ainsi, le système de la figure 1 simplifie l'architecture informatique d'un cybercafé en externalisant les fonctions de serveur de crédit vers un serveur de crédit externe et indépendant à la fois des cybercafés 6, 7 et du fournisseur d'accès 8.

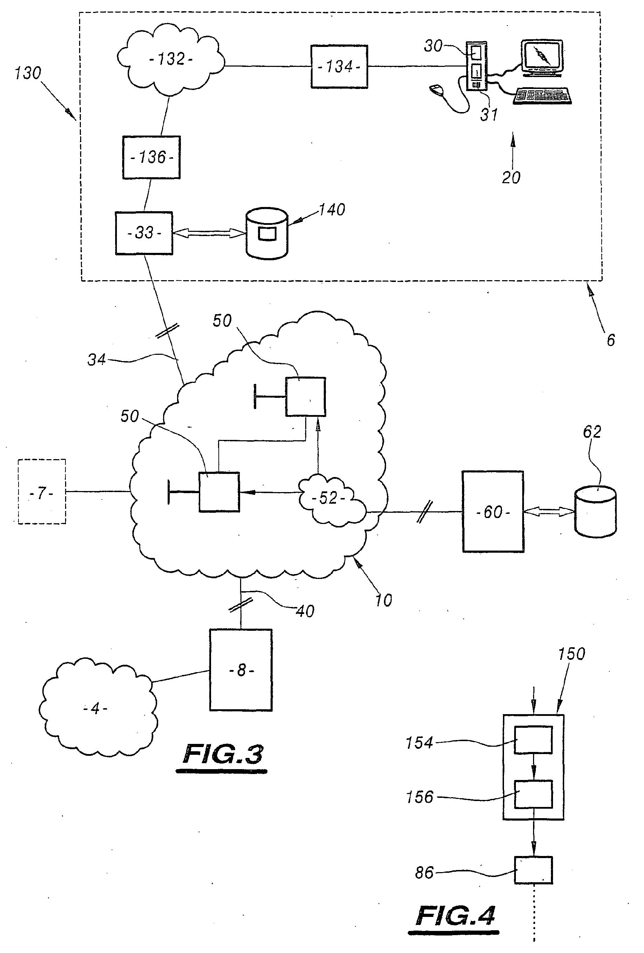

La figure 3 représente un second mode de réalisation d'un système d'accès à la toile d'araignée 4 désigné par la référence générale 130. Les éléments de ce système 130 déjà décrit en regard de la figure 1 portent les mêmes références numériques.

Dans ce système 130, les stations d'accès 20 sont raccordées au serveur d'accès 33 non pas par le réseau local 30 mais par un réseau grande distance 132, tel que le réseau téléphonique commuté de l'opérateur France Télécom. Dans ces conditions, le centre d'accès 6 n'est plus un cybercafé, mais regroupe un ensemble d'utilisateurs équipés de stations d'accès 20 et souhaitant se connecter à Internet sans pour cela avoir souscrit, au préalable, un abonnement personnel auprès d'un fournisseur d'accès. A cet effet, chaque station d'accès 20 est équipée d'un modem 134, et le serveur d'accès 33 est équipé d'au moins un modem 136. Les modems 134 et 136 sont raccordés au réseau téléphonique commuté 132 et aptes à établir par l'intermédiaire de ce réseau une liaison de transmission d'informations.

Avantageusement, le serveur d'accès 33 est équipé de plusieurs modems 136 de manière à pouvoir établir simultanément plusieurs liaisons de transmission d'informations avec plusieurs stations d'accès 20 différentes.

Dans ce second mode de réalisation, le serveur d'accès 33 est associé à une mémoire 140 formant moyen de stockage d'informations contenant une copie du logiciel de détection 31.

Le serveur d'accès 33 en plus d'être programmé pour réaliser les tâches décrites à la figure 2 est ici également programmé de façon conventionnelle pour exécuter les tâches décrites en regard de la figure 4.

De plus, dans ce mode de réalisation, le logiciel de détection 31 est adapté pour envoyer vers le serveur d'accès 33 une information signalant sa présence sur la station de travail 20 dès que la liaison de transmission d'informations entre les modems 134 et 136 est établie.

Le fonctionnement du système 130 est identique à celui décrit en regard de la figure 2 à l'exception du fait que la liaison de transmission d'informations entre la station d'accès 20 et le fournisseur d'accès 8 s'établit par l'intermédiaire du réseau téléphonique commuté 132.

De plus, dans ce mode de réalisation, dès que la liaison de transmission d'informations a été établie entre les modems 134 et 136, le serveur d'accès 33 reçoit l'information de présence transmise par le logiciel de détection 31.

Dans le cas où, l'information de présence du logiciel 31 n'est pas reçue, le serveur d'accès 33 détecte ainsi l'absence du logiciel 31 sur la station d'accès 20 et procède automatiquement à une étape 150 (figure 4) de téléchargement du logiciel de détection 31. Lors de cette étape 150, le serveur d'accès 33 commande par exemple l'affichage d'une page HTML dans le navigateur 30 de la station d'accès 20 demandant à l'utilisateur s'il souhaite télécharger le logiciel 31.

La station d'accès 20 acquiert la réponse de l'utilisateur et la transmet, lors de l'opération 154 au serveur d'accès 33.

Dans le cas d'une réponse affirmative, c'est-à-dire si l'utilisateur souhaite télécharger le logiciel 31, alors le serveur d'accès 33 transmet lors de l'opération 156 une copie du logiciel 31 stockée dans la mémoire 140 vers la station d'accès 20.

Une fois le téléchargement du logiciel 31 et le lancement de celui-ci sur la station d'accès 20 terminé, le procédé se poursuit de façon identique au procédé de la figure 2 à partir de l'étape 86.

Les systèmes décrits ici l'ont été dans le cas où chaque dispositif d'accès a Internet, que ce soit les cybercafés 6 et 7 ou la station individuelle 20 de la figure 3, utilisent le même fournisseurs d'accès à Internet 8. Toutefois, il convient de noter que, comme indiqué lors de l'étape 96, c'est le serveur d'accès 33 qui fournit au serveur de crédit 60 l'identificateur du fournisseur d'accès Internet à utiliser. Par conséquent, chacun des centres d'accès à Internet est capable d'utiliser un fournisseur d'accès Internet différent de celui des autres ou même de changer de fournisseur d'accès Internet en modifiant simplement l'identificateur de fournisseur d'accès transmis lors de l'étape 96.

Les systèmes d'accès à la toile d'araignée mondiale 4 ont été décrits dans le cas où le serveur de crédit débite le crédit d'un compte proportionnellement au temps écoulé depuis le début de l'établissement d'une liaison de transmission d'informations. En variante, le serveur de crédit est apte à débiter le crédit associé à un compte non pas en fonction d'un temps écoulé mais par exemple en fonction de la quantité d'informations émises et/ou reçues par l'intermédiaire de la liaison de transmission établie.

Dans un mode de réalisation moins intéressant que celui de la figure 3, chaque station d'accès est programmé de manière à réaliser à la fois les tâches de la station d'accès 20 et du serveur d'accès 33. Ainsi, dans ce mode de réalisation, la station d'accès se connecte directement au serveur de crédit 60. Toutefois, ce mode de réalisation présente l'inconvénient que contrairement au système 130 de la figure 3, chaque station d'accès doit être équipée de tous les logiciels nécessaires pour établir une liaison de transmission avec le serveur de crédit 60 et, par conséquent, en cas de mise à jour de ces logiciels, chacune de ces stations d'accès utilisant le serveur de crédit 60 doit être modifiée.

## Revendications

1. Système d'accès à la toile d'araignée mondiale, comportant :
- plusieurs centres (6, 7) d'accès à la toile d'araignée mondiale indépendants les uns des autres et équipés chacun d'au moins une station (20) d'accès à la toile d'araignée mondiale, la ou chaque station (20) d'accès étant apte à être raccordée à un fournisseur d'accès pour naviguer sur la toile d'araignée mondiale (4) par l'intermédiaire d'un réseau public (10) de transmission d'informations, et
- au moins un fournisseur d'accès (8) équipé d'un ensemble de serveurs informatiques propre à fournir un accès à la toile d'araignée mondiale (4) pour des stations d'accès (20), et
- un serveur de crédit (60) apte à autoriser ou à inhiber la connexion de chaque station d'accès au fournisseur d'accès correspondant en fonction d'informations représentatives d'un crédit sur un compte, avant même que ladite station d'accès ne soit raccordée au fournisseur d'accès,
**caractérisé en ce que** le serveur de crédit (60) est raccordé aux différents centres d'accès (6, 7) et audit au moins un fournisseur d'accès (8) par l'intermédiaire du réseau public (10), et **en ce que** le serveur de crédit (60) est apte à gérer les connexions à la toile d'araignée mondiale (4) établies à partir de chacune des stations d'accès (20) des différents centres d'accès (6, 7) de manière à former un serveur de crédit commun aux différents centres d'accès (6, 7) et audit au moins un fournisseur d'accès (8).

2. Système selon la revendication 1, **caractérisé :**
- **en ce qu'**il comporte un ensemble d'organes (50) de commutation commandables propre à raccorder entre elles différentes voies de communication du réseau public (10) de manière à établir une liaison de transmission d'informations entre chaque station d'accès (20) et ledit au moins un fournisseur d'accès (8), et
- **en ce que** le serveur de crédit (60) est apte à commander chaque organe de commutation (50) pour établir ou inhiber une liaison de transmission d'informations entre une station d'accès (20) d'un des centres d'accès (6, 7) et ledit au moins un fournisseur d'accès (8).

3. Système selon la revendication 2, **caractérisé :**
- **en ce que** la ou chaque station d'accès (20) est propre à :
- acquérir une demande d'établissement d'une liaison de transmission d'informations avec ledit au moins un fournisseur d'accès (8), et
- en réponse à cette demande, acquérir un numéro de compte, et
- **en ce que** le serveur de crédit (60) est apte à recevoir le numéro de compte acquis par la ou chaque station d'accès (20) et, en réponse, à commander lesdits organes de commutation (50) en fonction des informations représentatives d'un crédit sur le compte associé au numéro de compte reçu.

4. Système selon la revendication 3, **caractérisé en ce que** le serveur de crédit (60) est apte à acquérir, pour la liaison de transmission d'informations dont il a commandé l'établissement, le temps écoulé entre l'instant d'établissement de cette liaison et l'instant d'interruption de cette liaison, et à débiter automatiquement un compte correspondant au numéro de compte reçu d'un montant fonction de ce temps écoulé.

5. Système selon la revendication 3 ou 4, **caractérisé en ce que** le serveur de crédit (60) est apte à commander l'interruption, au sein même du réseau public (10), d'une liaison de transmission d'informations dont il a commandé l'établissement lorsque le crédit sur le compte correspondant à cette liaison est épuisé.

6. Système selon l'une quelconque des revendications 3 à 5, **caractérisé en ce que** le serveur de crédit (60) est apte à commander ou à inhiber l'établissement de la liaison de transmission d'informations entre une station d'accès (20) et ledit au moins un fournisseur d'accès (8) uniquement en fonction du numéro de compte transmis et du crédit disponible sur le compte correspondant à ce numéro de compte.

7. Système selon l'une quelconque des revendications 3 à 6, **caractérisé en ce qu'**il comporte des tickets (70) formant moyens de paiement, chaque ticket (70) comportant un cache amovible (72) propre à occulter un numéro de compte créditeur.

8. Système selon la revendication 7, **caractérisé en ce que** le cache amovible (72) est une couche opaque propre à être grattée pour découvrir le numéro de compte créditeur.

9. Système selon l'une quelconque des revendications 3 à 8, **caractérisé en ce que** chaque centre d'accès comporte plusieurs stations d'accès (20) et un serveur d'accès (33), et **en ce que** le serveur d'accès (33) est apte à recevoir la demande d'établissement d'une liaison de transmission d'informations avec ledit au moins un fournisseur d'accès (8) acquise par chaque station d'accès (20), et, en réponse, à commander l'acquisition par chaque station d'accès (20) d'un numéro de compte, et à transmettre le numéro de compte acquis au serveur de crédit (60).

10. Système selon la revendication 9, **caractérisé en ce que** les stations d'accès (20) sont raccordées au serveur d'accès (33) par un réseau local (32) de transmission d'informations.

11. Système selon la revendication 9 ou 10, **caractérisé :**
- **en ce que** chaque station d'accès (20) est équipée :
- d'un logiciel (30) de navigation sur la toile d'araignée mondiale, et
- d'un logiciel (31) de détection automatique de la fermeture du logiciel de navigation (30) propre, en réponse à la détection de la fermeture, à transmettre une commande de déconnexion au serveur d'accès (33) du centre d'accès correspondant, et
- **en ce que** ce serveur d'accès (33) est propre à transmettre automatiquement une commande d'interruption de la liaison de transmission d'informations entre une station d'accès (20) et ledit au moins un fournisseur d'accès (8) au serveur de crédit (60) en réponse à la réception d'une commande de déconnexion.

12. Système selon la revendication 11, **caractérisé en ce que** le serveur d'accès (33) est associé à des moyens (140) de stockage d'informations contenant une copie du logiciel de détection (31), et **en ce que** le serveur d'accès (33) est propre à détecter automatiquement l'absence du logiciel de détection (31) sur une station d'accès (20) en réponse à la réception d'une demande d'établissement d'une liaison de transmission d'informations transmises par cette station d'accès (20), et à commander le transfert d'une copie du logiciel de détection (31) vers cette station d'accès (20) à partir de moyens (140) de stockage d'informations associés au serveur d'accès (33).

13. Procédé d'accès à la toile d'araignée mondiale dans un système conforme à l'une quelconque des revendications 3 à 12, **caractérisé en ce qu'**une station d'accès (20) acquiert une demande d'établissement d'une liaison de transmission d'informations avec ledit au moins un fournisseur d'accès (8), et, en réponse à cette demande, acquiert un numéro de compte.
